(19) Europäisches Patentamt
European Patent Office
Office européen des brevets

(11) **EP 4 411 592 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **23155136.7**

(22) Anmeldetag: **06.02.2023**

(51) Internationale Patentklassifikation (IPC):
*G06K 7/10* (2006.01)    *G06K 7/14* (2006.01)

(52) Gemeinsame Patentklassifikation (CPC):
**G06K 7/1417; G06K 7/10722**

(54) **VERFAHREN ZUM LESEN EINES OPTISCHEN CODES UND OPTOELEKTRONISCHER CODELESER**

METHOD FOR READING AN OPTICAL CODE AND OPTOELECTRONIC CODE READER

PROCÉDÉ DE LECTURE D'UN CODE OPTIQUE ET LECTEUR DE CODE OPTOÉLECTRONIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**07.08.2024 Patentblatt 2024/32**

(73) Patentinhaber: **SICK AG**
**79183 Waldkirch (DE)**

(72) Erfinder: **Müller, Dr. Romain**
**79252 Stegen (DE)**

(56) Entgegenhaltungen:
**EP-A1- 2 677 492       EP-A1- 4 080 402**
**US-A1- 2003 116 628**

## Beschreibung

Die Erfindung betrifft ein Verfahren zum Lesen eines optischen Codes und einen optoelektronischen Codeleser nach dem Oberbegriff von Anspruch 1 beziehungsweise 15.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die codetragenden Objekte an dem Codeleser vorbeigefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera unter Echtzeitbedingungen vor Herausforderungen. Dabei unterstützt der Einsatz heterogener Rechenarchitekturen, d.h. eines Verbundes eines Mikroprozessors (CPU, Central Processing Unit) mit beispielsweise einem FPGA (Field Programmable Gate Array), einem DSP (Digital Signal Processor), einer GPU (Graphics Processing Unit) oder auch einem sogenannten KI-Beschleuniger (NPU, Neural Processing Unit, TPU, Tensor Processing Unit).

Besonders bewährt hat sich hier die Kombination mit einem FPGA, das für das Auslesen der Bilddaten aus dem Bildsensor zuständig ist. Das FPGA ist zudem über eine Hochgeschwindigkeitsschnittstelle (PCI, Peripheral Component Interconnect, PCIE, PCI Express, MIPI, Mobile Industry Processor Interface) mit einem Speicher des Mikroprozessors verbunden. So werden die Bilddaten über DMA (Direct Memory Access) vom FPGA in den Speicher übertragen. Dieser Prozess des Auslesens und Speicherns wird als Streaming bezeichnet. Der mittels CPU implementierte Decoder kann dann nachgelagert auf die gespeicherten Bilder zugreifen und die Codes auslesen. Der Streaming-Ansatz ist mit anderen oben genannten Zusatzbausteinen einer heterogenen Architektur nicht ohne Weiteres möglich, die in der Regel schon selbst eines gespeicherten Bildes bedürften, während das FPGA Bilddaten direkt pixelweise auslesen und weiterverarbeiten kann.

Die Bilddaten werden vorzugsweise schon unmittelbar, on-the-fly, im FPGA vorverarbeitet, und dabei können mit den Bilddaten Zusatzinformationen oder Metadaten für den Mikroprozessor gespeichert werden. Typische Vorverarbeitungsschritte betreffen die Segmentierung, in der interessierende Bereiche (ROI, Region of Interest) mit Codekandidaten aufgefunden werden, oder eine Helligkeitsanpassung. Auf diese beiden möglichen Vorverarbeitungen wird im Folgenden näher eingegangen. Die EP 2 003 599 A1 einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 1 365 577 A1 offenbart ein Verfahren zum Betrieb eines optoelektronischen Sensors, in dem ein Bild bereits während des Empfanges komprimiert wird. Bei solchen Vorverarbeitungen wird jeweils die Fähigkeit des FPGAs ausgenutzt, viele einfache Rechenoperationen wie beispielsweise Matrixmultiplikationen parallel in Echtzeit auszuführen. Sequenzielle, komplexere Rechenoperationen wie diejenigen eines Decoders zum Lesen optischer Codes bleiben dem Mikroprozessor vorbehalten, der dafür auf die bereitgestellten Bilddaten und mögliche Vorverarbeitungsergebnisse zurückgreift

Während einer Segmentierung oder Vorsegmentierung wird als Vorbereitung für das Lesen von Codes in einem aufgenommenen Ausgangsbild eines codetragenden Objekts nach Codebildbereichen gesucht, also denjenigen Bereichen im Bild, die potenziell einen Code enthalten können. In den meisten heutigen Codeleseanwendungen erfolgt die Segmentierung durch traditionelle Bildverarbeitungsalgorithmen und von Hand erstellte Klassifikatoren. Ein anderer Ansatz für die Segmentierung basiert auf künstlichen neuronalen Netzen, insbesondere tiefen Faltungsnetzen (Deep Neural Network, Convolutional Neural Network CNN).

In der Arbeit Zhao, Qijie, et al, "Deep Dual Pyramid Network for Barcode Segmentation using Barcode-30k Database", arXiv preprint arXiv:1807.11886 (2018) wird ein großer Datensatz synthetisiert und damit eine Codesegmentierung durch CNNs durchgeführt. Die genaue Netzwerkarchitektur und Hardwareimplementierung werden nicht vorgestellt.

Xiao, Yunzhe, and Zhong Ming, "1D Barcode Detection via Integrated Deep-Learning and Geometric Approach", Applied Sciences 9.16 (2019): 3268 reklamieren eine um mindestens 5 % gegenüber bisherigen Ansätzen verbesserte Performance beim Lokalisieren von Barcodes, ohne dass Parameter von Hand eingestellt werden müssten.

Hansen, Daniel Kold, et al, "Real-Time Barcode Detection and Classification using Deep Learning", IJCCI. 2017 erkennen Codebereiche einschließlich einer Verdrehung in Echtzeit mit einem Intel i5-6600 3.30 GHz und einer Nvidia GeForce GTX 1080.

Zharkov, Andrey; Zagaynov, Ivan, Universal Barcode Detector via Semantic Segmentation, arXiv preprint arXiv:1906.06281, 2019 erkennen Barcodes und identifizieren den Codetyp in einer CPU-Umgebung.

Die DE 101 37 093 A1 offenbart ein Verfahren zum Erkennen eines Codes und einen Codeleser, bei dem der Schritt, den Code innerhalb einer Bildumgebung zu lokalisieren, mittels eines neuronalen Netzes durchgeführt wird. Training und Architektur des neuronalen Netzes werden nicht im Detail beschrieben. Die DE 10 2018 109 392 A1 schlägt zum Erfassen optischer Codes die Verwendung von Faltungsnetzen vor. Aus der US 10 650 211 B2 ist ein weiterer Codeleser bekannt, der Faltungsnetze für das Auffinden der Codes in einem aufgenommenen Bild verwendet.

Die EP 3 428 834 B1 nutzt einen klassischen Decoder, der mit Verfahren ohne maschinelles Lernen arbeitet, um einen für maschinelles Lernen ausgebildeten Klassifikator oder spezieller ein neuronales Netz zu trainieren. Mit der Vorverarbeitung oder dem Auffinden von Codebereichen befasst sich dieses Dokument jedoch nicht näher.

Die EP 2 555 160 B1 findet in einer Vorverarbeitung auf einem FPGA interessierende Bereiche oder Codekandidaten anhand eines Kontrastmaßes.

In der EP 3 916 633 A1 werden eine Kamera und ein Verfahren zum Verarbeiten von Bilddaten beschrieben, bei dem eine Segmentierung mittels neuronalen Netzes in einem Streaming-Verfahren erfolgt, d.h. Bilddaten schon verarbeitet werden, noch während weitere Bilddaten eingelesen werden. Zumindest die ersten Schichten des neuronalen Netzes können auf einem FPGA implementiert sein. Das verringert erheblich die Rechenzeiten und Anforderungen an die Hardware. Neben den Resultaten des neuronalen Netzes wird in manchen Ausführungsformen auch das Originalbild nach möglichen klassischen Vorverarbeitungen in einen Speicher gestreamt.

Die noch unveröffentlichte europäische Patentanmeldung mit dem Aktenzeichen 22157758.8 befasst sich mit einem Auffinden von Codebildbereichen, das ein erstes Segmentierungsverfahren mit klassischer Bildverarbeitung und ein zweites Segmentierungsverfahren mit maschinellem Lernen miteinander kombiniert, um so zu deutlich verlässlicheren Ergebnissen zu kommen.

Mit einer Helligkeitsanpassung oder Kontrastspreizung wird als weitere denkbarer Vorverarbeitungsschritt das Codelesen vereinfacht, wenn der Helligkeits- oder Grauwertebereich bei der Bildaufnahme nicht ausgenutzt wird. Mögliche Ursachen dafür sind Unterbelichtung, ein dunkler Hintergrund oder im Falle von Codes auch schlechter Druck. Bei der Kontrastspreizung werden die aufgenommenen Helligkeitswerte auf den verfügbaren Dynamik- oder Grauwertebereich von beispielsweise acht Bit reskaliert oder gespreizt. Beispielsweise kann nach der Bildaufnahme eine Kontrastspreizung je nach Abstand zum Objekt erfolgen. Dazu müssen aber die Objekte und zugehörigen Abstände bekannt sein. In der EP 2 677 458 A1 wird für eine Helligkeitskorrektur ein jeweiliger Korrekturfaktor für einzelne Pixel oder Gruppen von Pixeln aus einer perspektivischen Transformation berechnet, die Geometrien auf einer Objektebene in dem Erfassungsbereich in Geometrien der Bildebene umrechnet.

Die EP 0 366 099 B1 offenbart eine recheneffiziente Technik für eine Bildkontrastverbesserung. Dabei wird ein Histogramm aus den Helligkeitswerten der Pixel und daraus eine Transferfunktion gebildet, mit der dann die ursprünglichen Helligkeitswerte angepasst werden. Die EP 1 359 746 A1 befasst sich mit einer Bildverarbeitungsvorrichtung, die ebenfalls ein Histogramm aufbaut, um kleinste und größte Helligkeitswerte aufzufinden und auf dieser Basis das Bildsignal zu spreizen. Damit wird jeweils nur eine globale Kontrastspreizung erreicht. Die EP 3 495 987 B1 beschreibt ein Verfahren zum Lesen von Barcodes, bei dem der Kontrast lokal aus Histogrammen einer Nachbarschaft angepasst wird. Dazu wiederum ist erforderlich, immer wieder mit hohem Aufwand lokale Histogramme für das jeweils zu korrigierende Pixel zu erzeugen.

Die Arbeit von Zhuang, Liyun, und Yepeng Guan, "Image enhancement via subimage histogram equalization based on mean and variance", Computational intelligence and neuroscience 2017 (2017) beschreibt ein Verfahren, bei dem ein Histogramm eines Eingangsbildes in vier Teile aufgeteilt wird. Diese Unterteilung betrifft das Histogramm, nicht das Eingangsbild, und ermöglicht damit keine lokale Kontrastspreizung.

Die noch unveröffentlichte europäische Patentanmeldung mit dem Aktenzeichen 22173324.9 beschreibt eine Kameravorrichtung und ein Verfahren zum Aufnehmen und zur Helligkeitsanpassung eines Bildes. Dabei wird das Bild in einer Vorverarbeitung in Kacheln unterteilt und zu den Kacheln eine jeweilige Helligkeitsverteilung bestimmt. Außerdem werden interessierende Bereiche identifiziert. Nach Zuordnung von Kacheln zu einem interessierenden Bereich werden die jeweiligen Helligkeitsverteilungen dieser Auswahl von Kacheln zu einer Helligkeitsverteilungen des interessierenden Bereichs kombiniert. So wird effizient und gezielt der interessierende Bereich kontrastgespreizt.

Sollen sowohl eine Segmentierung als auch eine Kontrastspreizung durchgeführt werden, so ergibt sich ein praktisches Problem. Eine gezielte Kontrastspreizung eines interessierenden Bereichs ist nur in Kenntnis des interessierenden Bereichs möglich. Bei einem zu dunklen oder zu hellen Bild schlägt aber die Segmentierung womöglich auf den interessierenden Bereich gar nicht an. Umgekehrt kann eine globale Kontrastspreizung oder auch eine lokale Kontrastspreizung unabhängig von einem Ergebnis einer Segmentierung durchgeführt werden. Das wiederum hat Auswirkungen auf die Segmentierung und das Codelesen: In dem pauschal und ohne Rücksicht auf interessierende Bereiche kontrastgespreizten Bild verhält sich die Segmentierung möglicherweise unerwartet, und es kann leicht vorkommen, dass ein Code so nicht mehr lesbar ist. Beispielsweise wird ein heller Code in einem dunklen Bild übersättigt, oder ein dunkler Code in einem hellen Bild bleibt auch nach der Kontrastspreizung zu dunkel. Bei einer on-the-fly-Verarbeitung ist außerdem das Zeitverhalten zu bedenken, denn die Bildinformation steht immer nur teilweise, sozusagen auf die Vergangenheit bezogen zur Verfügung.

Es ist daher Aufgabe der Erfindung, das Lesen eines optischen Codes weiter zu verbessern.

Diese Aufgabe wird durch ein Verfahren zum Lesen eines optischen Codes und einen optoelektronischen Codeleser nach Anspruch 1 beziehungsweise 15 gelöst. Es handelt sich um ein computerimplementiertes Verfahren, dass beispielsweise in einem Codeleser oder einer daran angeschlossenen Recheneinheit abläuft. Es wird ein Bild mit dem optischen Code aufgenommen, vorzugsweise abschnitts- oder zeilenweise, und eine erste Helligkeitsanpassung des Bildes durchgeführt. Zudem wird in dem Bild ein interessierender Bereich (ROI, region of interest) mit dem optischen Code aufgefunden. Es kann in dem Bild mehrere optische Codes und mehrere interessierende Bereiche geben, stellvertretend wird die Verarbeitung eines interessierenden Bereiches beschrieben, die auf die weiteren interessierenden Bereiche übertragbar ist. Die Bildinhalte des interessierenden Bereichs werden einem Decoder zugeführt, der mit mindestens einem an sich bekannten und daher hier nicht näher erläuterten Verfahren versucht, den Inhalt des optischen Codes auszulesen.

Die Erfindung geht von dem Grundgedanken aus, die erste Helligkeitsanpassung sehr frühzeitig in der Verarbeitungskette vorzunehmen, so dass die Suche nach dem interessierenden Bereich bereits auf entsprechend aufbereitete Bildinformationen zurückgreifen kann. Dafür ist die erste Helligkeitsanpassung lokal, speist sich also aus einer jeweiligen lokalen Umgebung innerhalb des Bildes und nicht dem ganzen Bild. Das ermöglicht eine on-the-fly-Verarbeitung noch während des Streamens des Bildes. Die Bilddaten des Bildes werden also nach und nach beispielsweise von einem Bildsensor eingelesen und vorzugsweise nach und nach im Laufe einer Relativbewegung zwischen codetragendem Objekt und aufnehmendem Gerät aufgenommen. Die erste Helligkeitsanpassung findet bereits in Teilbereichen des Bildes statt, noch während weitere Abschnitte des Bildes eingelesen werden. In den durch die erste Helligkeitsanpassung vorverarbeiteten Bilddaten wird dann der interessierende Bereich aufgefunden. Das ist ebenfalls lokal beurteilbar, typische Kriterien sind ausreichender Kontrast oder viele Kanten, für weitere Details wird auf den einleitend genannten Stand der Technik verwiesen. Daher kann das Auffinden des interessierenden Bereichs ebenfalls schon on-the-fly während des Streamens erfolgen, in der Verarbeitungskette der ersten Helligkeitsanpassung folgend. Alternativ ist denkbar, die jeweils mit der ersten Helligkeitsanpassung bearbeiteten Teilbereichen als vorverarbeitetes Bild in einen Speicher zu streamen und erst nachgelagert in diesem vorverarbeiteten Bild nach dem interessierenden Bereich zu suchen.

Die beiden Begriffe Teilbereich und Abschnitt sind bewusst unterschiedlich gewählt, weil die Granularität der lokalen Helligkeitsanpassung und der jeweiligen Datenpakete während des Streamens vorzugsweise unterschiedlich ist. Insbesondere werden jeweils Zeilen eingelesen, während sich die Helligkeitsanpassung über Blöcke mit Teilen mehrerer aufeinanderfolgender Zeilen erstreckt. Sowohl die Teilbereiche als auch die Abschnitte sind bevorzugt eine a-prior-Unterteilung, die von dem Bildinhalt unabhängig ist.

Die Erfindung hat den Vorteil, dass durch eine geschickte Abfolge der Verarbeitungsschritte eine Segmentierung und Helligkeitsanpassung optimal miteinander kombiniert werden. Das ermöglicht insbesondere eine intelligente Kontrastspreizung, die an den interessierenden Bereich angepasst ist. Herkömmlich gab es hier einen Zirkelkonflikt: für eine intelligente Kontrastspreizung ist es erforderlich, den interessierenden Bereich zu kennen. Um aber den interessierenden Bereich aufzufinden, muss bisweilen zuvor eine Kontrastspreizung erfolgt sein. Die Erfindung löst diesen Zirkel in einer recheneffizienten Weise auf. Dadurch können Codes nun auch unter erschwerten Bedingungen etwa in besonders dunklen oder hellen Bildern gelesen werden.

Bevorzugt ist die erste Helligkeitsanpassung eine Kontrastspreizung, die eine Spanne der in einem jeweiligen Teilbereich vorkommenden Helligkeitswerte auf eine größere Spanne aufspreizt. Die tatsächlich vorkommenden Helligkeitswerte werden auf eine größere Spanne oder einen größeren Anteil der möglichen Helligkeitswerte reskaliert. Es kann auf den gesamten verfügbaren Dynamikbereich aufgespreizt oder ein Randbereich weggelassen werden. Beispielsweise kann bei einer 8-Bit-Grauwertaufösung auf Werte von 0...255 oder nur von $i... (255-j)$ gespreizt werden, wobei $i$, $j$ kleine natürliche Zahlen sind, etwa $i=j=15$. Die Reskalierung ist vorzugsweise linear. Im Falle von Farbbildern können die Farben einzeln behandelt einzeln behandelt oder zu mehreren Farben ein Grauwert berechnet und der angepasste Wert auf die beteiligten Farben rückgerechnet werden.

Die Spanne der in einem Teilbereich vorkommenden Helligkeitswerte wird bevorzugt aus mindestens einem kleinsten und größten vorkommenden Helligkeitswert bestimmt. Das ist eine sehr einfache und mit besonders wenig Rechenaufwand zu leistende Möglichkeit, die Spanne der tatsächlich vorkommenden Helligkeitswerte zu ermitteln. Es ergibt sich ein kleinster vorkommender Helligkeitswert MinGrau und ein größter vorkommender Helligkeitswert MaxGrau, und das Intervall [MinGrau, MaxGrau] kann dann auf ein größeres Intervall wie [i, 255-j] aufgespreizt werden. Es ist denkbar, besonders dunkle oder helle Helligkeitswerte oder einzelne Ausreißer zu ignorieren, so dass diese nicht für MinGrau oder MaxGrau in Frage kommen. Insbesondere können mehrere kleinste und größte vorkommende Helligkeitswerte und daraus beispielsweise ein Mittelwert oder Median bestimmt werden.

Die Spanne der in einem Teilbereich vorkommenden Helligkeitswerte wird bevorzugt aus zwei Peaks in einem lokalen Histogramm der Helligkeitswerte über den Teilbereich bestimmt. Ein solches Histogramm ist eine diskrete Helligkeitsverteilung und schließt andere Repräsentationen einer Helligkeitsverteilung ein, wie beispielsweise einen Funktionsfit, um eine kontinuierliche Helligkeitsverteilung zu gewinnen. Bei einem optischen Code ist das Histogramm idealerweise bimodal. Sofern es aber aufgrund diverser denkbarer Störungen mehr als zwei Peaks gibt, können der erste und letzte Peak oder die beiden ausgeprägtesten Peak verwendet werden, oder es wird, falls es nur einen Peak gibt, die Verschmelzung in zwei Peaks aufgetrennt. Außerdem ist denkbar, einen besonders hellen Peak zu verwerfen, etwa bei einer 8-Bit-Grauwertauflösung in einem Bereich oberhalb eines Werts von 240, 245, 250 oder 252, denn es handelt sich vermutlich um einen uninteressanten Glanzreflex, insbesondere dann, wenn es noch einen zusätzlichen etwas weniger hellen Peak und einen dunklen Peak gibt. Die Spanne muss sich nicht unmittelbar aus der Lage der Peaks ergeben, sondern kann noch verengt oder besser erweitert werden. Das Histogramm kann vor dem Auffinden von Peaks geglättet werden, beispielsweise mit einem Gaussfilter. Es ist denkbar, das Vorgehen des Vorabsatzes hinzuzunehmen und die Werte MinGrau, MaxGrau bei der Festlegung der Spanne zu berücksichtigen, beispielsweise die Grenzen der Spanne zwischen MinGrau und einen dunklen Peak beziehungsweise MaxGrau und einen hellen Peak zu legen, insbesondere in die jeweilige Mitte.

Das Bild wird vorzugsweise zeilenweise eingelesen, wobei mehrere Zeilen zwischengepuffert werden, um daraus Teilbereiche zu bilden. Das eignet sich besonders für eine Bildaufnahme in Relativbewegung beispielsweise von Objekten auf einem Förderband mit einem Zeilen(bild)sensor. Auch ein Bild von einem Matrixsensor kann zeilenweise ausgelesen werden. Es ist denkbar, alternativ von einem spaltenweisen Einlesen zu sprechen, das wird nicht weiter unterschieden. Es ergibt sich ein zeilenweises Streaming mit Vorverarbeitung on-the-fly und Übergabe an einen Speicher oder eine nachgelagerte Verarbeitung. Dabei werden über die aktuelle Zeile hinaus auch noch einige vorangegangene Zeilen gepuffert, so dass für die on-the-fly-Verarbeitung während des Streamens eine gewisse Historie verfügbar bleibt.

Der Teilbereich ist bevorzugt ein Block aus mehreren Teilabschnitten mehrerer aufeinanderfolgender Zeilen. Damit wird das soeben angesprochene Zwischenpuffern ausgenutzt, um die erste Helligkeitsanpassung auf einige vorangegangene Zeilen und nicht nur die aktuelle Zeile beziehen zu können. Beispielsweise umfasst ein Teilabschnitt 128 Pixel einer Zeile, und es wird ein 5x128-Pixelblock aus fünf aufeinanderfolgenden Zeilen gebildet. Die Zahlenwerte sind so besonders geeignet, aber nichtsdestotrotz erst einmal nur ein Beispiel.

In die erste Helligkeitsanpassung eines Blocks sind bevorzugt Helligkeitswerte mindestens eines benachbarten Blocks einbezogen. Das Einbeziehen erfolgt insbesondere durch Interpolieren, ein Pixelwert nach erster Helligkeitsanpassung bestimmt sich dann aus dessen eigenem Block und mindestens einem benachbarten Block mit einer Interpolationsvorschrift entsprechender Gewichtung der Blöcke. Es sei nochmals darauf hingewiesen, dass durch das Streamen immer nur ein bereits eingelesener Teil der Bildinformation zur Verfügung steht, also gleichsam die Vergangenheit. Es ist aber möglich, die erste Helligkeitsanpassung ein wenig zu verzögern, mit Zwischenpuffern der eingelesenen Abschnitte des Bildes, um so ein wenig weiter in die Zukunft schauen zu können und konkret benachbarte Blocks in allen Richtungen berücksichtigen zu können. Vorzugsweise bezieht die erste Helligkeitsanpassung nur den aktuellen Block und dessen unmittelbar vorangehenden benachbarten Block ein.

Der interessierende Bereich wird bevorzugt in einem Segmentierungsverfahren mit maschinellem Lernen aufgefunden, wobei das Segmentierungsverfahren insbesondere ein neuronales Netz und speziell ein tiefes Faltungsnetz Faltungsnetz (CNN, Convoluational Neural Network) aufweist. Nach der ersten Helligkeitsanpassung kann es Artefakte in dem Bild geben, mit denen ein Segmentierungsverfahren mit maschinellem Lernen besser umgehen kann als eine klassische Bildverarbeitung. Dabei sollen klassische Bildverarbeitung und maschinelles Lernen als Gegenbegriffe verstanden werden. Eine klassische Bildverarbeitung ist schon mit ihrer Programmierung für ihre Aufgabe vorbereitet und bedarf nicht erst der Erfahrung beziehungsweise des Trainings, und ihre Leistungsfähigkeit ist von Anfang an bis über die gesamte Laufzeit mehr oder weniger konstant. Bei maschinellem Lernen hingegen hängt all dies bei Weitem nicht nur von einer programmierten Struktur ab, sondern ergibt sich erst im Zusammenhang mit dem Training und der Güte der Trainingsdaten. Eine Segmentierung mittels neuronalen Netzes ist zumindest für die frühen, möglicherweise alle Schichten on-the-fly während des Streamens möglich, hierzu wird ergänzend auf die einleitend schon genannte EP 3 916 633 A1 verwiesen.

Das neuronale Netz wird bevorzugt mittels überwachten Lernens anhand von Beispielbildern trainiert, die insbesondere anhand der Ergebnisse eines Segmentier- und/oder Decodierverfahrens ohne Verfahren des maschinellen Lernens bewertet sind. Das überwachte Lernen (supervised learning) ermöglicht, aus einem Trainingsdatensatz mit Beispielen einer vorgegebenen richtigen Bewertung auf später im Betrieb präsentierte Ausgangsbilder zu verallgemeinern. Entsprechende Architekturen von neuronalen Netzen und Algorithmen für Training wie Betrieb (Inferenz) sind für sich bekannt, so dass auf gut funktionierende Lösungen zurückgegriffen oder darauf aufgesetzt werden kann. Einige Literaturstellen wurden einleitend genannt. Die Zuweisung der richtigen Bewertung zu einem Beispielbild, also das Annotieren oder Labeling, kann prinzipiell von Hand erfolgen, da das Training vor der Laufzeit stattfindet. Ergänzend oder alternativ kann mindestens ein klassischer Decoder herangezogen werden, der Beispielbilder auswertet und der Codebildbereiche retrospektiv nur als Positivbeispiel annotiert, wenn dort tatsächlich ein Code gelesen werden könnte.

Das Bild mit dem Code wird vorzugsweise als Originalbild ohne die erste Helligkeitsanpassung gespeichert. Die jeweils eingelesenen Abschnitte werden in dieser Ausführungsform einerseits wie beschrieben einer ersten Helligkeitsanpassung unterzogen. Zugleich werden die ursprünglichen Bilddaten ohne erste Helligkeitsanpassung beispielsweise in einen Speicher geschrieben. Damit ergibt sich insbesondere effektiv ein zweiter Streaming-Kanal zum Durchschleifen des Originalbildes. Andere Vorverarbeitungen als die erste Helligkeitsanpassung bleiben für das durchgeschleifte Originalbild denkbar, beispielsweise eine Binarisierung, die auf das Originalbild angewandt werden. Übrigens können diejenigen Bilddaten, die der ersten Helligkeitsanpassung unterzogen werden, wahlweise zusätzlich gespeichert oder verworfen werden, sobald der interessierende Bereich aufgefunden ist.

Der Code in einem interessierenden Bereich wird bevorzugt mit Bildinformationen des Bildes ohne die erste Helligkeitsanpassung gelesen. Dazu wird besonders bevorzugt auf das durchgeschleifte Originalbild gemäß dem Vorabsatz zurückgegriffen. Die erste Helligkeitsanpassung dient dann allein dem Auffinden von interessierenden Bereichen. Mit Kenntnis der Lage des interessierenden Bereichs werden die entsprechenden Bilddaten in dem Originalbild bestimmt. Nach der ersten Helligkeitsanpassung, die keinerlei besondere Rücksicht auf die ja noch gar nicht bekannten interessierenden Bereiche genommen hat, lassen Codes sich nämlich oft nicht mehr gut oder gar nicht mehr lesen. Mit dieser Ausführungsform wird die erste Helligkeitsanpassung genutzt, um die interessierenden Bereiche verlässlich auch in besonders dunklen oder hellen Bildern zu finden. Codes werden dann in den interessierenden Bereichen aus ursprünglichen Bilddaten gelesen, ohne Qualitätsverlust durch die erste Helligkeitsanpassung.

Vor dem Lesen des Codes wird bevorzugt eine zweite Helligkeitsanpassung für den interessierenden Bereich durchgeführt. Die zweite Helligkeitsanpassung erfolgt vorzugsweise auf ursprünglichen Bilddaten, die von der ersten Helligkeitsanpassung nicht verändert wurden. Die zweite Helligkeitsanpassung funktioniert im Grundsatz wie die erste Helligkeitsanpassung, ist aber nun nicht auf vorab festgelegte Teilbereiche bezogen, sondern den interessierenden Bereich. Artefakte durch Einbeziehen von Bildbereichen ohne Code werden vermieden. In diesem Sinne ist es eine angepasste oder intelligente Helligkeitsanpassung und insbesondere Kontrastspreizung. Sofern es mehrere interessierende Bereiche gibt, erfolgt die zweite Helligkeitsanpassung vorzugsweise einzeln für jeden interessierenden Bereich. Eine zweite Helligkeitsanpassung außerhalb von interessierenden Bereichen erfolgt vorzugsweise nicht.

Für die zweite Helligkeitsanpassung werden bevorzugt Vorverarbeitungen der ersten Helligkeitsanpassung genutzt, insbesondere kleinste und größte in jeweiligen Teilbereichen vorkommende Helligkeitswerte und/oder lokale Histogramme von in einem jeweiligen Teilbereich vorkommenden Helligkeitswerten. Dadurch wird die zweite Helligkeitsanpassung besonders recheneffizient. Pro Teilbereich sind im Rahmen der ersten Helligkeitsanpassung bereits Auswertungen der Helligkeit vorgenommen, die erneut genutzt werden können.

Besonders bevorzugt wird eine Auswahl derjenigen Teilbereiche ermittelt, die dem interessierenden Bereich entsprechen. Anschaulicher gesprochen sind das diejenigen Teilbereiche oder Blöcke, die den interessierenden Bereich überdecken. Es treten dabei in der Regel Randeffekte auf, weil ein Rand des zweiten Teilbereichs nicht oder jedenfalls nicht überall von einem ersten Teilbereich abgedeckt ist, beziehungsweise umgekehrt ein erster Teilbereich den Rand des zweiten Teilbereichs überragt. Hier ist wahlweise eine zu großzügige Überdeckung mit zu vielen Kacheln oder eine sparsame Überdeckung mit zu wenigen Kacheln denkbar, oder auch eine Mischform, die einen Teil des Randes überragt und einen anderen Teil des Randes auslässt. Vorzugsweise werden Teilbereiche noch in die Auswahl aufgenommen, die mit dem interessierenden Bereich zu einem vorgegebenen Mindestanteil überlappen. Der Mindestanteil ist vorzugsweise als ein Prozentsatz der Pixelzahl in einem Teilbereich und damit Flächenanteil angegeben und ist ein Parameter, der entsprechend einer großzügigen oder sparsamen Überdeckung des interessierenden Bereichs mit Teilbereichen gewählt werden kann.

Soll die zweite Helligkeitsanpassung auf einem größten oder kleinsten vorkommenden Helligkeitswert basieren, so sind dafür lediglich noch die jeweiligen größten und kleinsten vorkommenden Helligkeitswerte der Teilbereiche der Auswahl zu vergleichen. Sofern ein Histogramm der Helligkeitswerte gebildet werden soll, können die lokalen Histogramme der Teilbereiche der Auswahl zusammengeführt, d.h. binweise die Counts der lokalen Histogramme aufaddiert werden. In anderen Repräsentationen der Helligkeitsverteilung ohne Histogramme ist ebenfalls mit wenigen einfachen Rechenschritten möglich, aus den Helligkeitsverteilungen pro Teilbereich eine Helligkeitsverteilung des interessierenden Bereichs zu erzeugen.

Vorteilhafterweise liest eine erste Verarbeitungseinheit das Bild in den Abschnitten ein, führt die erste Helligkeitsanpassung des Bildes durch und findet in dem Bild den interessierenden Bereich auf. Die erste Verarbeitungseinheit ist somit für das Streaming und währenddessen für die erste Helligkeitsanpassung und die Segmentierung jeweils on-the-fly während des Streamings zuständig. Bei diesen Schritten sind zahlreiche Pixelzugriffe erforderlich. Die erste Verarbeitungseinheit weist dafür bevorzugt ein FPGA (Field Programmable Gate Array) auf. Ein FPGA ist besonders geeignet zum Streamen von Bilddaten sowie für eine Echtzeitverarbeitung großer Datenmengen mit vielen, vergleichsweise einfachen einzelnen Rechenoperationen.

Vorteilhafterweise liest eine zweite Verarbeitungseinheit, insbesondere ein Mikroprozessor, den optischen Code in dem interessierenden Bereich und führt insbesondere zuvor eine zweite Helligkeitsanpassung für den interessierenden Bereich durch. Wie bereits erwähnt, ist die erste Verarbeitungseinheit und insbesondere ein FPGA besonders geeignet zum Streamen sowie für eine Echtzeitverarbeitung großer Datenmengen mit vergleichsweise einfachen einzelnen Rechenoperationen. Eine CPU dagegen ist viel flexibler und von sich aus zu komplexeren Rechenschritten in der Lage, und das ist für eine komplexere nachgelagerte Bildverarbeitung wie das Codelesen von Vorteil. Auch für die zweite Helligkeitsanpassung ist die zweite Verarbeitungseinheit eher geeignet. Sie kann dafür auf Teilergebnisse der ersten Verarbeitungseinheit im Zuge der ersten Helligkeitsanpassung zurückgreifen, wie zuvor beschrieben. Die zweite Verarbeitungseinheit hat vorzugsweise Zugriff auf einen Speicher, in den das Originalbild ohne erste Helligkeitsverarbeitung gestreamt wird.

Der erfindungsgemäße optoelektronische Codeleser umfasst mindestens ein Lichtempfangselement zur Erzeugung von Bilddaten aus Empfangslicht und eine Steuer- und Auswertungseinheit, in der ein Verfahren zum Lesen eines optischen Codes in einer der erläuterten Ausführungsformen implementiert ist. Der Lichtempfänger kann derjenige eines Barcodescanners sein, beispielsweise eine Photodiode, und die Intensitätsprofile der Scans werden zeilenweise zu dem Ausgangsbild zusammengesetzt. Vorzugsweise handelt es sich um einen Bildsensor eines kamerabasierten Codelesers. Der Bildsensor wiederum kann ein Zeilensensor zur Erfassung einer Bildzeilen oder ein Matrixsensor sein, dessen Aufnahmen abschnittsweise zu einem größeren Ausgangsbild zusammengefügt werden. Ein Verbund mehrerer Codeleser oder Kameraköpfe ist ebenfalls denkbar.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Übersichtsdarstellung der beispielhaften Montage eines Codelesers über einem Förderband;

Fig. 2    eine schematische Darstellung einer heterogenen Architektur zur Bildauswertung und Helligkeitsanpassung mit einem FPGA als Streamer und einer CPU zur weiteren Bildverarbeitung beziehungsweise als Decoder;

Fig. 3    ein beispielhaftes Ablaufdiagramm zum Lesen eines optischen Codes;

Fig. 4    ein Beispielbild mit optischen Codes, einer Unterteilung in Blöcke und einem interessierenden Bereich mit einem optischen Code;

Fig. 5    ein beispielhaftes zu dunkel aufgenommenes Bild mit einem optischen Code;

Fig. 6    das Bild gemäß Figur 5 nach einer ersten Helligkeitsanpassung, und

Fig. 7    eine alternative schematische Darstellung eines Ablaufs zum Lesen eines optischen Codes.

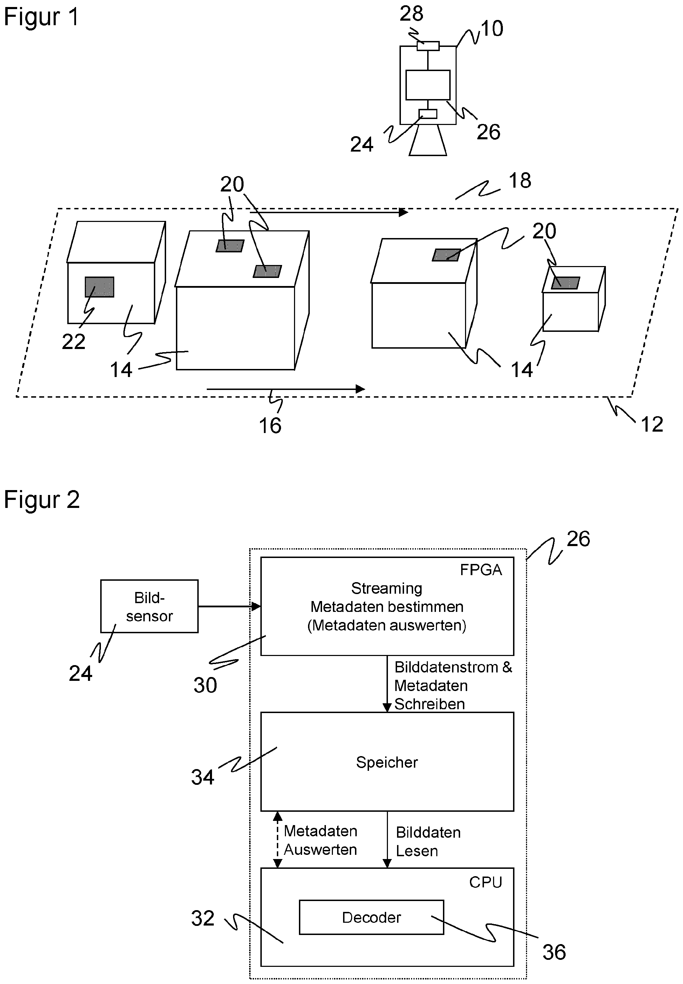

Figur 1 zeigt einen kamerabasierten Codeleser 10, der über einem Förderband 12 montiert ist, das Objekte 14, wie durch den Pfeil 16 angedeutet, durch den Erfassungsbereich 18 des Codelesers 10 fördert. Die Objekte 14 tragen an ihren Außenflächen Codes 20, die von dem Codeleser 10 erfasst und ausgewertet werden. Die Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Diese stationäre Anwendung eines Codelesers an einem Förderband 12 ist in der Praxis sehr häufig. Die Erfindung bezieht sich aber auf das Codelesen beziehungsweise den Codeleser 10 selbst, so dass dieses Beispiel nicht einschränkend verstanden werden darf.

Der Codeleser 10 erfasst mit einem Bildsensor 24 Bilddaten der geförderten Objekte 14 und der Codes 20, die von einer Steuer- und Auswertungseinheit 26 weiterverarbeitet werden. Die Steuer- und Auswertungseinheit 26 wird sogleich unter Bezugnahme auf die Figur 2 näher beschrieben. Über eine Schnittstelle 28 gibt der Codeleser 10 Informationen aus, wie Bilddaten möglicherweise mit verschiedenen Verarbeitungsstufen oder gelesene Codes.

Figur 2 zeigt die Steuer- und Auswertungseinheit 26 und ihre Anbindung in einer schematischen Darstellung. Diese Darstellung zeigt eine vorteilhafte Ausführungsform, allgemein kann eine Steuer- und Auswertungseinheit 26 beliebiger interner Struktur die Bilddaten des Bildsensors 24 auslesen und in der noch zu beschreibenden Weise verarbeiten. Die Steuer- und Auswertungseinheit 26 in der bevorzugten Ausführungsform gemäß Figur 2 umfasst eine erste Verarbeitungseinheit 30, die im Folgenden am Beispiel eines FPGA (Field Programmable Gate Array) sowie eine zweite Verarbeitungseinheit 32, die im Folgenden am Beispiel eines Mikroprozessors oder einer CPU (Central Processing Unit) erläutert wird. Die zweite Verarbeitungseinheit 32 weist vorzugsweise einen Decoder 36 zum Lesen optischer Codes auf.

Die erste Verarbeitungseinheit 30 ist einerseits mit dem Bildsensor 24 verbunden und weist andererseits eine Schnittstelle in Richtung der zweiten Verarbeitungseinheit 32 auf, vorzugsweise eine Hochgeschwindigkeitsschnittstelle (PCI, PCIE, MIPI). Beide Verarbeitungseinheiten 30, 32 können auf einen Speicher 34 für Bilddaten und Zusatzinformationen, Metadaten oder Verarbeitungsergebnisse zugreifen. Die entsprechenden Lese- und Schreibvorgänge erfolgen vorzugsweise mittels DMA (Direct Memory Access). Der Speicher 34 lässt sich mindestens funktional, je nach Ausführungsform auch strukturell als Teil der zweiten Verarbeitungseinheit 32 auffassen.

Im Betrieb nimmt nun der Bildsensor 24 jeweils ein neues Bild oder einen neuen Bildabschnitt auf, insbesondere eine Bildzeile, wobei dann die Bildzeilen sukzessive im Verlauf der Relativbewegung zwischen Codeleser 10 und Objekt 14 aneinandergefügt werden. Die Bilddaten des Bildsensors 24 werden von der ersten Verarbeitungseinheit 30 ausgelesen und in den Speicher 34 übertragen oder gestreamt. Dabei werden zugleich Zusatzinformationen oder Metadaten bestimmt, und zwar "on-the-fly", d.h. direkt beim Übertragen in den Speicher 34 und noch während weitere Bilddaten des Bildes von dem Bildsensor 24 einzulesen sind beziehungsweise eingelesen werden. Die hier relevanten Vorverarbeitungen betreffen eine erste Helligkeitsanpassung und eine Segmentierung, d.h. das Auffinden interessierender Bereiche mit einem optischen Code 20. Andere Vorverarbeitungen sind denkbar. Das in den Speicher 34 gestreamte Bild ist vorzugsweise in dem Sinne das Originalbild, dass es von der ersten Helligkeitsanpassung nicht verändert wurde. Andere Vorverarbeitungen bleiben denkbar, auch wenn dann der Begriff Originalbild nicht mehr ganz scharf zutrifft. Die durch die erste Helligkeitsanpassung veränderten Bilddaten werden verworfen, nachdem damit Metadaten gewonnen wurden, insbesondere Helligkeitsinformationen und die Lage von interessierenden Bereichen, wie im Einzelnen noch zu beschreiben. Alternativ wird doch das Bild nach der ersten Helligkeitsanpassung in den Speicher 34 gestreamt, in Ergänzung zu einem Originalbild oder an dessen Stelle.

Die zweite Verarbeitungseinheit 32 greift auf die Bilddaten in dem Speicher 34 zu, um sie weiter zu verarbeiten. Dabei liest ein Decoder 36 der zweiten Verarbeitungseinheit 32 den Inhalt der mit den Bilddaten aufgenommenen optischen Codes 20 innerhalb interessierender Bereiche aus. Die Lage der interessierenden Bereiche wird dabei als Metadaten mitgeteilt. Die zweite Verarbeitungseinheit 32 führt vorzugsweise vor dem Lesen der optischen Codes 20 eine zweite Helligkeitsanpassung durch. Im Gegensatz zu der ersten Helligkeitsanpassung, die noch in Unkenntnis interessierender Bereiche vorzugsweise für alle Bilddaten erfolgt, bezieht sich die zweite Helligkeitsanpassung jeweils gezielt auf einen interessierenden Bereich. Die zweite Helligkeitsanpassung kann Teilergebnisse der ersten Helligkeitsanpassung erneut nutzen, die als Metadaten gespeichert wurden.

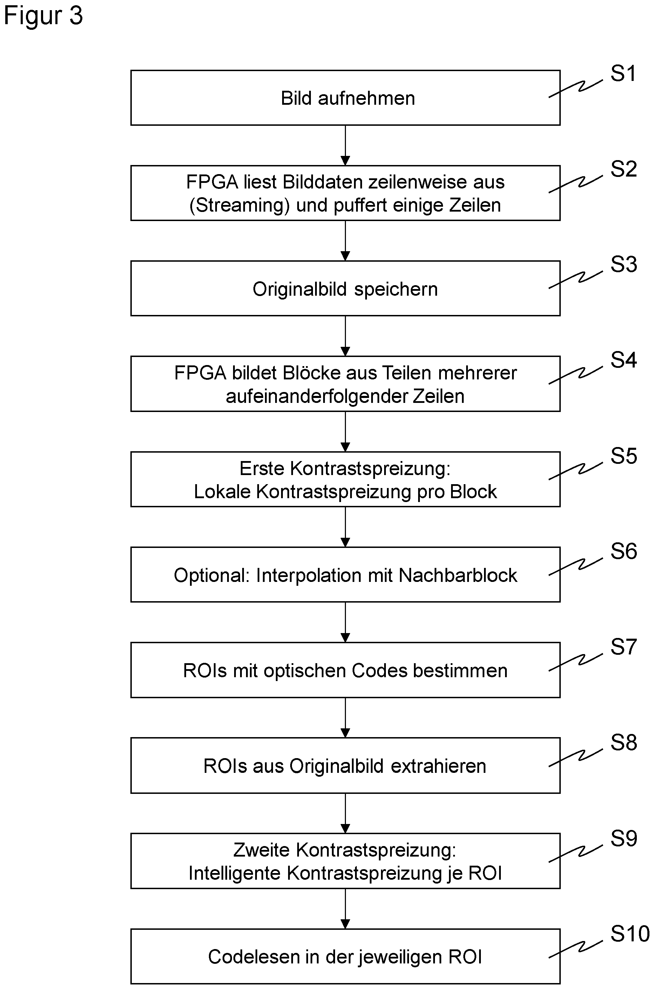

Figur 3 zeigt ein beispielhaftes Ablaufdiagramm zum Lesen eines optischen Codes. In einem Schritt S1 wird mit dem Bildsensor 24 ein Bild aufgenommen. Ein separierter vorangestellter Bildaufnahmeschritt ist eine Übervereinfachung, da vorzugsweise eine zeilenweise Aufnahme im Verlauf einer Relativbewegung mit schrittweise immer weiteren Bildaufnahmen der nächsten Bildzeile erfolgt.

In einem Schritt S2 werden die Bilddaten Stück für Stück von der ersten Vorverarbeitungseinheit 30 aus dem Bildsensor 24 ausgelesen. Beispielsweise werden Zeile für Zeile pro Taktzyklus x Pixel übertragen. Die erste Vorverarbeitungseinheit 30 puffert rollierend einige Bildzeilen, beispielsweise immer die aktuellsten fünf Bildzeilen.

In einem Schritt S3 durchlaufen die Bilddaten die erste Vorverarbeitungseinheit 30 ohne weitere Bearbeitungsschritte und werden in den Speicher 34 geschrieben. Dies kann als ein paralleler Streamingkanal aufgefasst werden, der die ursprünglichen Bilddaten sichert. Optional können Vorverarbeitungen vorgenommen werden, beispielsweise Bildfilter angewandt oder das Bild binarisiert werden, jedoch nicht die nun zu beschreibende erste Helligkeitsanpassung. Denkbar ist, das Originalbild in Kacheln zu unterteilen, also kleinere rechteckige Unterabschnitte von m x n Pixeln, und hierzu jeweils Helligkeitsinformationen für die zweite Helligkeitsanpassung im noch zu erläuternden Schritt S9 zu gewinnen. Im folgenden Ablauf wird stattdessen im Schritt S9 vorzugswese auf Helligkeitsinformationen zurückgegriffen, die im Zuge der ersten Helligkeitsanpassung gewonnen wurden.

In einem Schritt S4 bildet die erste Verarbeitungseinheit 30 parallel zum direkten Speichern der Bilddaten des Schrittes S3, weiterhin noch während des Streamens, Blöcke aus den eingelesenen Bilddaten. Beispielsweise werden die Zeilen in Bereiche mit einer bestimmten Pixelanzahl unterteilt, wie 128 oder 256 Pixel. Ein jeweiliger Block bildet sich aus der aktuellen Zeile und den darüberliegenden Zeilen, beispielsweise ein Block von 5 x 128 Pixeln bei fünf gepufferten Zeilen.

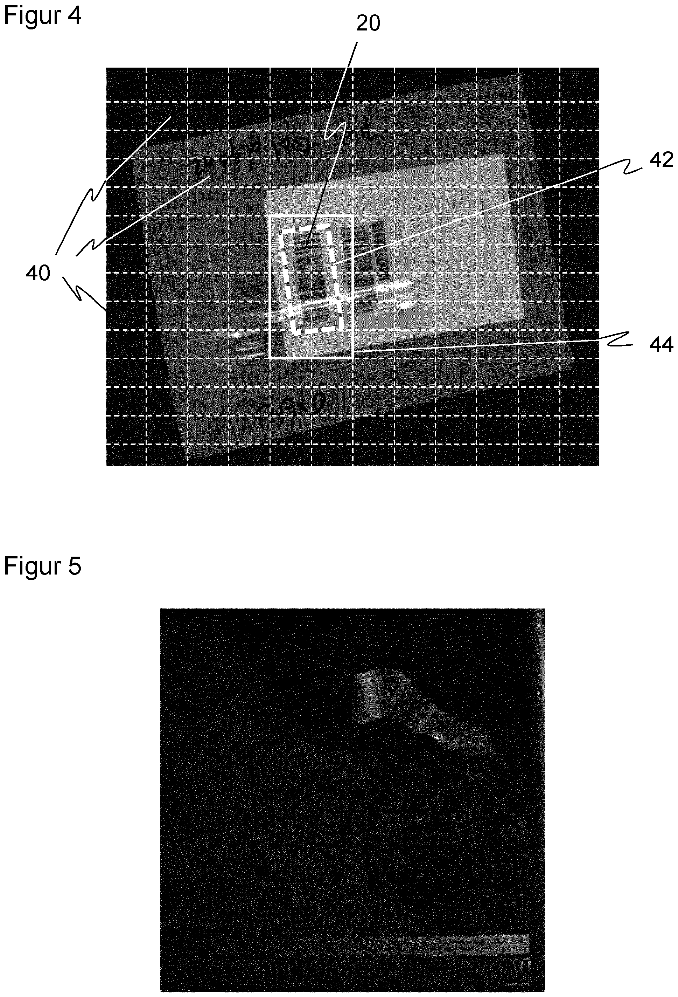

Figur 4 zeigt ein Beispielbild mit einem optischen Code 20 und einer Unterteilung in Blöcke 40. Darauf wird im Folgenden mehrfach zurückgegriffen, um die Schritte der Figur 3 zu illustrieren. Alternativ zu der dargestellten Unterteilung in ein festes Gitter ist ein jeweiliges Weiterschieben von Blöcken 40 um nur ein Pixel in einem rollierenden Verfahren ähnlich einem gleitenden Durchschnitt vorstellbar. Dies gilt insbesondere in vertikaler Richtung. Anzumerken ist weiterhin, dass während des Verfahrens gemäß Figur 3 immer nur die bereits eingelesenen Bildzeilen und Blöcke 40 bekannt sind. Typischerweise erfolgt das Streamen von links oben nach rechts unten, so dass bei einem betrachteten Pixel alles, was weiter rechts und weiter unten folgt, noch nicht bekannt ist. Das Verfahren kann sozusagen nur in die Vergangenheit, nicht aber in die Zukunft schauen. Durch Zwischenpuffern und eine entsprechende zeitliche Verzögerung kann gleichsam die Gegenwart ein wenig in die Zukunft verschoben werden, soweit es erforderlich ist, eine entsprechende Nachbarschaft eines betrachteten Pixels zu kennen.

In einem Schritt S5 der Figur 3 erfolgt eine erste Helligkeitsanpassung. Beschrieben wird dies anhand einer Kontrastspreizung, die mit einer linearen oder sonstigen Funktion eine Spanne vorkommender Grauwerte auf eine breitere Spanne aufspreizt. Um die Spanne zu bestimmen, wird zu einem jeweiligen Block von beispielsweise 5 x 128 Pixeln ein Grauwerthistogramm gebildet, und darin wird nach zwei Peaks gesucht, die den hellen und dunkeln Werten des Codes 20 entsprechen und zwischen denen die Spanne liegt. In einer einfachen Auswertung werden lediglich der minimale und maximale Grauwert in dem Block gesucht. Die tatsächliche Spanne [MinGrau, MaxGrau] wird dann auf den verfügbaren Grauwertebereich von beispielsweise [0, 255] bei 8-Bit-Grauwertauflösung oder einen künstlich etwas kleiner gewählten Bereich [i, 255-j] gespreizt, mit i, j kleine natürliche Zahlen.

Die Kontrastspreizung für ein jeweiliges Pixel im(x,y) lässt sich als Formel wie folgt angeben: $im_{cp}(x,y) = (im(x,y) - MinGrau)/(MaxGrau - MinGrau)$, wobei MinGrau und MaxGrau in dem Block des Pixels im(x,y) bestimmt wurden. Folglich handelt es sich um eine lokale Kontrastspreizung, in die (nur) die Information des zugehörigen Blocks einfließt.

In einem optionalen Schritt S6 wird die Kontrastspreizung auf einen etwas größeren Bildbereich bezogen. Genaugenommen ist Schritt S6 kein Zusatzschritt, sondern es wird die zu Schritt S5 angegebene Rechenvorschrift ersetzt durch:

$$im_{cp}(x,y) = p(im(x,y) - \mathrm{MinGrau_i})/(\mathrm{MaxGrau_i} - \mathrm{MinGrau_i}) +$$

$$(1-p)(im(x,y) - \mathrm{MinGrau_{i+1}})/(\mathrm{MaxGrau_{i+1}} - \mathrm{MinGrau_{i+1}}).$$

Die Indizes i, i+1 beziehen sich auf den Block des betrachteten Pixels im(x,y) und dessen Nachbarblock. Ferner ist p ein Gewichtungsfaktor zwischen den beiden Blöcken. Es sind Interpolationsvorschriften denkbar, die noch mehr Blöcke berücksichtigen.

Um die Rechenvorschrift und den Gewichtungsfaktor p durch ein Beispiel verständlicher zu machen, sei ein Pixel an der Zeilenposition x=190 betrachtet. Bei einer Blocklänge von 128 ist dieses Pixel dem zweiten Block zugeordnet. Der Gewichtungsfaktor p soll in dieser beispielhaften Ausführungsform berücksichtigen, wie nah oder fern das betrachtete Pixel seinem Nachbarblock ist, gemessen an der Mitte eines Blocks. Die halbe Blockgröße beträgt 64, und es ist (190-64)/128= 0,98. Es soll also zu 98% der eigene Block und zu nur 2% der vorangehende Nachbarblock berücksichtigt werden, also der erste Block.

Verallgemeinert ist P1=(x-w/2)/w, mit Zeilenkoordinate x und Blockbreite w. P1 kann größer Eins werden, dann wird es auf Eins herabgesetzt. Es ist dann p=1-P1, womit die obigen Beispielwerte von 2% für den ersten Block und 98% für den zweiten Block rekonstruiert werden.

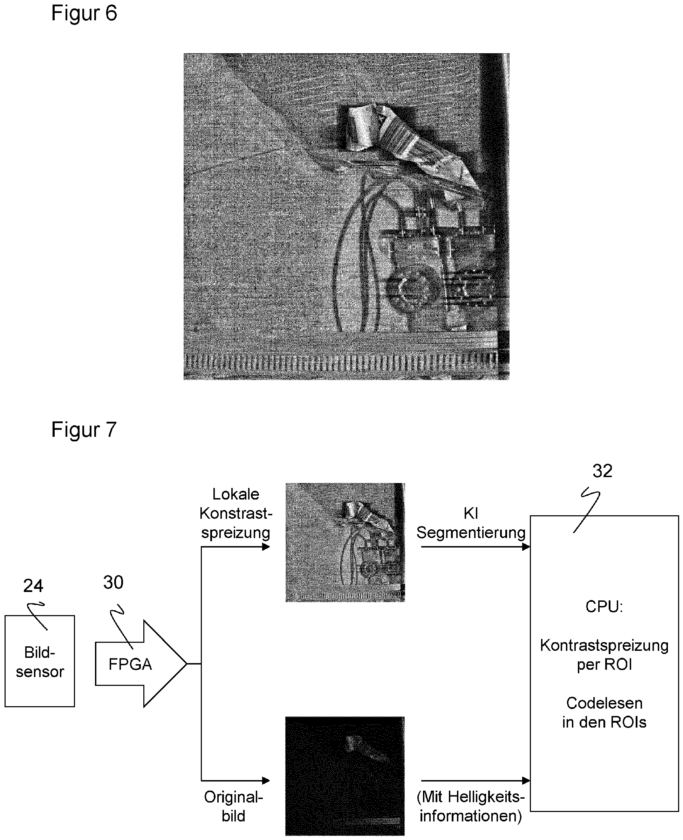

Die Figuren 5 und 6 illustrieren diese erste Helligkeitsanpassung. Dabei zeigt Figur 5 ein beispielhaftes zu dunkel aufgenommenes Bild mit einem optischen Code im Original und Figur 6 nach der ersten Helligkeitsanpassung. Offensichtlich werden nach der ersten Helligkeitsanpassung Details sichtbar, die zuvor nicht erkannt werden konnten.

In einem Schritt S7 werden in dem durch die erste Helligkeitsanpassung aufbereiteten Bild interessierende Bereiche mit optischen Codes 20 aufgefunden. Das entspricht der einleitend diskutierten Segmentierung, die an sich bekannt ist. Dank der ersten Helligkeitsanpassung ist eine Segmentierung nun auch mit einem dunkeln Bild wie dem der Figur 5 möglich.

Figur 4 zeigt beispielhaft einen interessierenden Bereich 42. Es gäbe dort noch mehr optische Codes und interessierende Bereiche, die in gleicher Weise bearbeitet werden, hier aber der Einfachheit halber nicht weiter beachtet werden. Die Entscheidung, ob ein Bildbereich zu einem interessierenden Bereich 42 gehört, richtet sich nach lokalen Kriterien, so dass die Segmentierung vorzugsweise on-the-fly in der ersten Verarbeitungseinheit 30 erfolgt.

Vorzugsweise wird für die Segmentierung ein Verfahren des maschinellen Lernens eingesetzt, insbesondere ein (tiefes) neuronales Netz oder Faltungsnetz (CNN, Convolutional Neural Network). Ein Verfahren des maschinellen Lernens geht wesentlich toleranter mit den zeitweise durch die erste Helligkeitsanpassung auftretenden Artefakten umgeben und leistet trotzdem eine robuste Segmentierung. Wie die einleitend schon genannte EP 3 916 633 A1 belegt, auf die ergänzend verwiesen wird, ist auch eine Segmentierung mit einem neuronalen Netz on-the-fly auf der ersten Verarbeitungseinheit 30 möglich.

Das neuronale Netz kann vorab anhand von Beispielbildern mit bekannten Codebildbereichen trainiert werden (Supervised Learning, überwachtes Lernen). Solche Beispielbilder können von Hand bewertet werden (Labelling, Annotating). Andererseits ist möglich, mit einem klassischen Decoder Beispielbilder auszuwerten und interessierende Bereiche retrospektiv anhand tatsächlich lesbarer Codes zu erkennen. Gerade ohne Zeitdruck im Offline-Modus sind solche klassischen Mittel sehr mächtig, so dass eine Vielzahl von Trainingsbeispielen automatisch generiert werden kann.

In einem Schritt S8 werden die interessierenden Bereiche in dem Originalbild bestimmt, das im Schritt S3 gespeichert wurde. In dem durch die erste Helligkeitsanpassung aufbereiteten Bild, wie beispielhaft in Figur 6 gezeigt, lassen sich nämlich zwar die interessierenden Bereiche sehr gut auffinden, nur ist in einem zeilenweise kontrastgespreizten Bild der optische Code 20 häufig nicht mehr lesbar. Deshalb wird das Bild nach erster Helligkeitsanpassung vorzugsweise nur für das Auffinden der interessierenden Bereiche genutzt und dann verworfen. Die als Metadaten verfügbaren Positionen der interessierenden Bereiche verwendet dann die zweite Verarbeitungseinheit 32, um gezielt nur Bildbereiche mit optischen Codes 20 im Originalbild weiterzuverarbeiten.

In einem Schritt S9 erfolgt eine optionale zweite Helligkeitsanpassung. Das Originalbild, wie in Figur 5 beispielhaft gezeigt, kann zu dunkel für ein Codelesen sein. Die zweite Helligkeitsanpassung erfolgt ganz gezielt für den interessierenden Bereich. Das bedeutet nicht nur, dass Bildbereiche außerhalb interessierender Bereiche ignoriert werden können, vor allem passt die Spanne der gespreizten Helligkeitswerte genau auf den interessierenden Bereich und hebt daher den optischen Code 20 sehr gut hervor.

Im Grundsatz läuft die zweite Helligkeitsanpassung so ab wie die erste Helligkeitsanpassung, d.h. es wird insbesondere eine Spanne vorkommender Helligkeitswerte anhand von minimalen und maximalen Werten oder Histogrammen bestimmt und mit einer vorzugsweise linearen Spreizfunktion auf eine größere Spanne möglicher Helligkeitswerte aufgespreizt. Die vorkommenden Helligkeitswerte sind aber nun nicht diejenige von Blöcken 40, die unabhängig von Bildinhalten gebildet wurden, sondern diejenigen aus dem interessierenden Bereich.

Teilergebnisse der ersten Helligkeitsanpassung können hier nochmals verwendet werden, um doppelte Auswertungen zu vermeiden, wenn solche Teilergebnisse als Metadaten mitgespeichert werden. Alternativ werden Kacheln unabhängig von der ersten Helligkeitsanpassung gebildet, seien es Blöcke derselben Abmessungen wie bei der ersten Helligkeitsanpassung oder andere Kacheln, und entsprechende Metadaten dazu erzeugt und gespeichert. Ein besonders bevorzugtes Vorgehen wird nochmals unter Bezugnahme auf Figur 4 erläutert. Die Lage des interessierenden Bereichs 42 ist nun aus Schritt S7 bekannt. Es wird eine Auswahl 44 von Blöcken 40 ausgewählt, die den interessierenden Bereich 42 überdecken. Dabei ist noch zu entscheiden, wie mit Blöcken in Randlage umgegangen wird. In dem Beispiel der Figur 4 umfasst die Auswahl 44 alle Blöcke 40, die irgendwie mit dem interessierenden Bereich überlappen. Es ist alternativ denkbar, Blöcke 40 am Rand zumindest teilweise auszuschließen. Dafür kann ein Mindestanteil, etwa ein prozentualer Schwellenwert p%, der Überlappung gefordert werden, und nur Blöcke 40 mit mindestens dieser Überlappung werden in die Auswahl 44 aufgenommen. Beispielweise würden bei einem Schwellenwert von 50% die beiden unteren Blöcke 40 und möglicherweise noch mehr Blöcke 40 aus der Auswahl 44 herausfallen. Die Darstellung entspricht einem kleinen Schwellenwert von unter 10%.

Die minimalen und maximalen Helligkeitswerte beziehungsweise Histogramme zu den Blöcken 40 der Auswahl 44 liegen bereits als Metadaten vor. Daraus können nun mit sehr wenigen Vergleichen minimale und maximale Helligkeitswerte des interessierenden Bereichs 42 bestimmt werden. Oder es werden die Histogramme der Blöcke 40 der Auswahl 44 kombiniert, indem die Counts pro Bin aufaddiert werden, um so effektiv ein Histogramm für den interessierenden Bereich 42 zu erhalten. Die Kombination ist wenig rechenaufwändig, ein Zugriff auf einzelne Pixel ist dafür nicht mehr erforderlich.

In einem Schritt S10 werden die optischen Codes 20 in dem interessierenden Bereich 42 gelesen. Geeignete Decoder sind an sich bekannt und werden nicht näher erläutert. Das Codelesen erfolgt nur auf einem kleinen Teil der Bilder, nämlich innerhalb des interessierenden Bereichs 42, in dem sich gemäß der Segmentierung des Schritts S7 tatsächlich ein optischer Code 20 befindet. Außerdem ist vorzugsweise im Schritt S9 eine angepasste zweite Helligkeitsanpassung erfolgt, die ein erfolgreiches Codelesen weiter unterstützt.

Figur 7 zeigt abschließend eine alternative schematische Darstellung eines Ablaufs zum Lesen eines optischen Codes 20. Entsprechend den Schritten S1 bis S3 streamt die erste Verarbeitungseinheit 30 in einem unteren Pfad der Figur 7 die Bilddaten als Originalbild in den Speicher 34. Dabei können on-the-fly während des Streamens kachelweise Helligkeitsauswertungen vorgenommen und als Metadaten mit abgespeichert werden. Die entsprechenden Helligkeitsinformationen sind eingeklammert, da dies in mehrfacher Hinsicht ein optionaler Schritt ist: Zum einen können die Helligkeitsinformationen auch im oberen Pfad als Metadaten bestimmt und übergeben oder erst in der CPU 32 berechnet werden. Außerdem ist eine zweite Helligkeitsanpassung gemäß Schritt S9 schon in sich als optional beschrieben worden.

In einem oberen Pfad der Figur 7 wird das Bild on-the-fly von der ersten Verarbeitungseinheit 30 mit einer ersten Helligkeitsanpassung entsprechend den Schritten S4 bis S6 bearbeitet, und anschließend werden entsprechend Schritt S7 die interessierenden Bereiche vorzugsweise mit einem Verfahren des maschinellen Lernens aufgefunden.

Die zweite Verarbeitungseinheit 32 greift auf die Metadaten mit den Positionen von interessierenden Bereichen aus dem oberen Pfad zu und bearbeitet entsprechend Schritt S8 die zugehörigen Bildinhalte des Originalbildes aus dem unteren Bild gezielt nur in den interessierenden Bereichen. Nach einer optionalen zweiten Helligkeitsanpassung entsprechend Schritt S9 werden die optischen Codes 20 in den interessierenden Bereichen entsprechend Schritt S10 gelesen.

## Patentansprüche

1.  Verfahren zum Lesen eines optischen Codes (20), bei dem ein Bild mit dem Code (20) aufgenommen, eine erste Helligkeitsanpassung des Bildes durchgeführt, in dem Bild ein interessierender Bereich (42) mit dem optischen Code (20) aufgefunden und der optische Code (20) in dem interessierenden Bereich (42) gelesen wird,
    **dadurch gekennzeichnet,**
    **dass** die erste Helligkeitsanpassung eine lokale Helligkeitsanpassung ist, die in Teilbereichen (40) des Bildes durchgeführt wird, noch während weitere Abschnitte des Bildes eingelesen werden, und dass das Auffinden des interessierenden Bereichs (42) auf bereits mit der ersten Helligkeitsanpassung bearbeiteten Bildinformationen des Bildes beruht.

2. Verfahren nach Anspruch 1,
   wobei die erste Helligkeitsanpassung eine Kontrastspreizung ist, die eine Spanne der in einem jeweiligen Teilbereich (40) vorkommenden Helligkeitswerte auf eine größere Spanne aufspreizt.

3. Verfahren nach Anspruch 1 oder 2,
   wobei die Spanne der in einem Teilbereich (40) vorkommenden Helligkeitswerte aus mindestens einem kleinsten und größten vorkommenden Helligkeitswert bestimmt wird.

4. Verfahren nach Anspruch 1 oder 2,
   wobei die Spanne der in einem Teilbereich (40) vorkommenden Helligkeitswerte aus zwei Peaks in einem lokalen Histogramm der Helligkeitswerte über den Teilbereich (40) bestimmt wird.

5. Verfahren nach einem der vorhergehenden Ansprüche,
   wobei das Bild zeilenweise eingelesen wird, und wobei mehrere Zeilen zwischengepuffert werden, um daraus Teilbereiche (40) zu bilden.

6. Verfahren nach Anspruch 5,
   wobei der Teilbereich (40) ein Block aus mehreren Teilabschnitten mehrerer aufeinanderfolgender Zeilen ist.

7. Verfahren nach Anspruch 6,
   wobei in die erste Helligkeitsanpassung eines Blocks Helligkeitswerte mindestens eines benachbarten Blocks einbezogen sind.

8. Verfahren nach einem der vorhergehenden Ansprüche,
   wobei der interessierende Bereich (42) in einem Segmentierungsverfahren mit maschinellem Lernen aufgefunden wird, wobei das Segmentierungsverfahren insbesondere ein neuronales Netz aufweist.

9. Verfahren nach einem der vorhergehenden Ansprüche,
   wobei das Bild mit dem Code (20) als Originalbild ohne die erste Helligkeitsanpassung gespeichert wird.

10. Verfahren nach einem der vorhergehenden Ansprüche,
    wobei der Code (20) in einem interessierenden Bereich (42) mit Bildinformationen des Bildes ohne die erste Helligkeitsanpassung gelesen wird.

11. Verfahren nach einem der vorhergehenden Ansprüche,
    wobei vor dem Lesen des Codes (20) eine zweite Helligkeitsanpassung für den interessierenden Bereich (42) durchgeführt wird.

12. Verfahren nach einem der vorhergehenden Ansprüche,
    wobei für die zweite Helligkeitsanpassung Vorverarbeitungen der ersten Helligkeitsanpassung genutzt werden, insbesondere kleinste und größte in jeweiligen Teilbereichen (40) vorkommende Helligkeitswerte und/oder lokale Histogramme von in einem jeweiligen Teilbereich (40) vorkommenden Helligkeitswerten.

13. Verfahren nach einem der vorhergehenden Ansprüche,
    wobei eine erste Verarbeitungseinheit (30), insbesondere ein FPGA (Field Programmable Gate Array), das Bild in den Abschnitten einliest, die erste Helligkeitsanpassung des Bildes durchführt und in dem Bild den interessierenden Bereich (42) auffindet.

14. Verfahren nach einem der vorhergehenden Ansprüche,
    wobei eine zweite Verarbeitungseinheit (32), insbesondere ein Mikroprozessor, den optischen Code (20) in dem interessierenden Bereich (42) liest und insbesondere zuvor eine zweite Helligkeitsanpassung für den interessierenden Bereich (42) durchführt.

15. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Lesen eines optischen Codes (20) nach einem der vorhergehenden Ansprüche implementiert ist.

**Claims**

1.  A method for reading an optical code (20), wherein an image with the code (20) is recorded, a first brightness adjustment of the image is carried out, a region of interest (42) with the optical code (20) is found in the image and the optical code (20) is read in the region of interest (42),
    **characterized in that** the first brightness adjustment is a local brightness adjustment which is carried out in subregions (40) of the image while further sections of the image are still being read in, and **in that** the finding of the region of interest (42) is based on image information of the image which has already been processed with the first brightness adjustment.

2.  The method according to claim 1,
    wherein the first brightness adjustment is a contrast spread which spreads a range of the brightness values occurring in a respective subregion (40) to a larger range.

3.  The method according to claim 1 or 2,
    wherein the range of brightness values occurring in a subregion (40) is determined from at least one smallest and largest occurring brightness value.

4.  The method according to claim 1 or 2,
    wherein the range of brightness values occurring in a subregion (40) is determined from two peaks in a local histogram of the brightness values over the subregion (40).

5.  The method according to any of the preceding claims,
    wherein the image is read in line by line, and wherein several lines are buffered in order to form subregions (40) therefrom.

6.  The method according to claim 5,
    wherein the subregion (40) is a block of a plurality of subsections of a plurality of successive lines.

7.  The method according to claim 6,
    wherein brightness values of at least one neighboring block are included in the first brightness adjustment of a block.

8.  The method according to any of the preceding claims,
    wherein the region of interest (42) is found in a segmentation method using machine learning, the segmentation method comprising in particular a neural network.

9.  The method according to any of the preceding claims,
    wherein the image with the code (20) as the original image without the first brightness adjustment is stored.

10. The method according to any of the preceding claims,
    wherein the code (20) is read in a region of interest (42) with image information of the image without the first brightness adjustment.

11. The method according to any of the preceding claims,
    wherein a second brightness adjustment is performed for the region of interest (42) prior to reading the code (20).

12. The method according to any of the preceding claims,
    wherein preprocessings of the first brightness adjustment are used for the second brightness adjustment, in particular smallest and largest brightness values occurring in respective subregions (40) and/or local histograms of brightness values occurring in a respective subregion (40).

13. The method according to any of the preceding claims,
    wherein a first processing unit (30), in particular an FPGA (Field Programmable Gate Array), reads in the image in the sections, performs the first brightness adjustment of the image and locates the region of interest (42) in the image.

14. The method according to any of the preceding claims,
    wherein a second processing unit (32), in particular a microprocessor, reads the optical code (20) in the region of interest (42) and in particular previously performs a second brightness adjustment for the region of interest (42).

15. An optoelectronic code reader (10) comprising at least one light-receiving element (24) for generating image data from received light and comprising a control and evaluation unit (26) in which a method for reading an optical code (20) according to any of the preceding claims is implemented.

**Revendications**

1. Procédé de lecture d'un code optique (20), consistant à enregistrer une image avec le code (20), à effectuer un premier ajustement de la luminosité de l'image, à localiser une zone d'intérêt (42) dans l'image avec le code optique (20), et à lire le code optique (20) dans la zone d'intérêt (42), **caractérisé en ce que**
le premier ajustement de la luminosité est un ajustement local de la luminosité qui est effectué dans des zones partielles (40) de l'image alors que d'autres sections de l'image sont encore en train d'être lues, et **en ce que** la localisation de la zone d'intérêt (42) est basée sur des informations de l'image déjà traitées avec le premier ajustement de la luminosité.

2. Procédé selon la revendication 1,
dans lequel le premier ajustement de la luminosité est un étalement de contraste qui étale une plage de valeurs de luminosité, apparaissant dans une zone partielle respective (40), sur une plage plus grande.

3. Procédé selon la revendication 1 ou 2,
dans lequel la plage des valeurs de luminosité apparaissant dans une zone partielle (40) est déterminée à partir d'au moins une valeur de luminosité la plus petite et d'au moins une valeur de luminosité la plus grande qui apparaissent.

4. Procédé selon la revendication 1 ou 2,
dans lequel la plage des valeurs de luminosité apparaissant dans une zone partielle (40) est déterminée à partir de deux pics dans un histogramme local des valeurs de luminosité sur la zone partielle (40).

5. Procédé selon l'une des revendications précédentes,
dans lequel l'image est lue ligne par ligne, et plusieurs lignes sont mises en mémoire tampon intermédiaire pour en former des zones partielles (40).

6. Procédé selon la revendication 5,
dans lequel la zone partielle (40) est un bloc constitué de plusieurs sections partielles de plusieurs lignes successives.

7. Procédé selon la revendication 6,
dans lequel le premier ajustement de la luminosité d'un bloc prend en compte des valeurs de luminosité d'au moins un bloc adjacent.

8. Procédé selon l'une des revendications précédentes,
dans lequel la zone d'intérêt (42) est localisée par un procédé de segmentation avec apprentissage automatique, le procédé de segmentation comprenant en particulier un réseau neuronal.

9. Procédé selon l'une des revendications précédentes,
dans lequel l'image avec le code (20) est stockée en tant qu'image originale sans le premier ajustement de la luminosité.

10. Procédé selon l'une des revendications précédentes,
dans lequel le code (20) dans une zone d'intérêt (42) contenant des informations de l'image est lu sans le premier ajustement de la luminosité.

11. Procédé selon l'une des revendications précédentes,
dans lequel, avant la lecture du code (20), un deuxième ajustement de la luminosité est effectué pour la zone d'intérêt (42).

12. Procédé selon l'une des revendications précédentes,
dans lequel des prétraitements du premier ajustement de la luminosité sont utilisés pour le deuxième ajustement de la luminosité, en particulier les plus petites et les plus grandes valeurs de luminosité qui apparaissent dans des zones partielles respectives (40) et/ou des histogrammes locaux de valeurs de luminosité qui apparaissent dans une zone partielle respective (40).

13. Procédé selon l'une des revendications précédentes,
dans lequel une première unité de traitement (30), en particulier un FPGA (Field Programmable Gate Array), lit l'image dans les sections, effectue le premier ajustement de la luminosité de l'image et localise la zone d'intérêt (42) dans l'image.

14. Procédé selon l'une des revendications précédentes,
dans lequel une deuxième unité de traitement (32), en particulier un microprocesseur, lit le code optique (20) dans la zone d'intérêt (42) et effectue en particulier au préalable un deuxième ajustement de la luminosité pour la zone d'intérêt (42).

15. Lecteur de code optoélectronique (10) comprenant au moins un élément récepteur de lumière (24) pour générer des données d'image à partir de la lumière reçue et comprenant une unité de commande et d'évaluation (26) qui met en œuvre un procédé de lecture d'un code optique (20) selon l'une des revendications précédentes.

Figur 1

Figur 2

# Figur 3

| | |
|---|---|
| Bild aufnehmen | S1 |
| FPGA liest Bilddaten zeilenweise aus (Streaming) und puffert einige Zeilen | S2 |
| Originalbild speichern | S3 |
| FPGA bildet Blöcke aus Teilen mehrerer aufeinanderfolgender Zeilen | S4 |
| Erste Kontrastspreizung: Lokale Kontrastspreizung pro Block | S5 |
| Optional: Interpolation mit Nachbarblock | S6 |
| ROIs mit optischen Codes bestimmen | S7 |
| ROIs aus Originalbild extrahieren | S8 |
| Zweite Kontrastspreizung: Intelligente Kontrastspreizung je ROI | S9 |
| Codelesen in der jeweiligen ROI | S10 |

Figur 4

Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2003599 A1
- EP 1365577 A1
- DE 10137093 A1
- DE 102018109392 A1
- US 10650211 B2
- EP 3428834 B1
- EP 2555160 B1
- EP 3916633 A1
- EP 22157758
- EP 2677458 A1
- EP 0366099 B1
- EP 1359746 A1
- EP 3495987 B1
- EP 22173324

**In der Beschreibung aufgeführte Nicht-Patentliteratur**

- **ARBEIT ZHAO, QIJIE et al.** Deep Dual Pyramid Network for Barcode Segmentation using Barcode-30k Database. *arXiv preprint arXiv:1807.11886*, 2018
- **XIAO, YUNZHE** ; **ZHONG MING**. 1D Barcode Detection via Integrated Deep-Learning and Geometric Approach. *Applied Sciences*, 2019, vol. 9 (16), 3268
- **HANSEN, DANIEL KOLD et al.** Real-Time Barcode Detection and Classification using Deep Learning. *IJCCI*, 2017
- **ZHARKOV, ANDREY** ; **ZAGAYNOV, IVAN**. Universal Barcode Detector via Semantic Segmentation. *arXiv preprint arXiv:1906.06281*, 2019
- **ZHUANG, LIYUN** ; **YEPENG GUAN**. Image enhancement via subimage histogram equalization based on mean and variance. *Computational intelligence and neuroscience 2017*, 2017